# EUROPEAN PATENT APPLICATION

(11) **EP 4 794 094 A1**
(43) Date of publication of application: **19.08.2026**
(21) Application number: 25765942.5
(22) Date of filing: 25.03.2025
(51) Int. Cl.: H01M 50/342

(54) **BATTERY CELL**

(30) Priority: 18.12.2024 CN 202411876416
(71) Applicant: Eve Power Co., Ltd., Jingmen, Hubei 448000 (CN)
(72) Inventor: WEI, Haitao, Jingmen, Hubei 448000 (CN); YUAN, Dingding, Jingmen, Hubei 448000 (CN); HE, Wei, Jingmen, Hubei 448000 (CN); CHEN, Xue, Jingmen, Hubei 448000 (CN); CHE, Liyuan, Jingmen, Hubei 448000 (CN); ZHAO, Hongwan, Jingmen, Hubei 448000 (CN); HUANG, Xin, Jingmen, Hubei 448000 (CN)
(74) Representative: Nederlandsch Octrooibureau
(86) International application number: PCT/CN2025/084572
(87) International publication number: WO 2026/129507

(57) **Abstract**

This application provides a battery cell, which relates to the technical field of battery cells. The battery cell includes an electrode assembly and a housing, wherein the electrode assembly is arranged in the housing, and an explosion-proof structure is provided on the housing; a valve opening area S of the explosion-proof structure, a valve opening pressure P of the explosion-proof structure, an electrolyte injection amount m of the battery cell, and a capacity C of the battery cell satisfy 2.4 ≤ S×P-C/(m×1000) ≤ 5.4. This application appropriately sets the valve opening area of the explosion-proof structure, valve opening pressure of the of the explosion-proof structure, electrolyte injection amount of the battery cell, and the capacity of the battery cell, so that when the battery cell fails and causes thermal runaway, the explosion-proof structure can work in time, and different parameters, for example the capacity of the battery cell, can be set according to actual conditions, so as to meet the explosion-proof requirements of large-capacity batteries.

## Description

This application claims the priority to and benefit of Chinese Patent Application No. 202411876416.X, filed with China Patent Office on December 18, 2024, the entire contents of which is incorporated herein by reference.

### TECHNICAL FIELD

The present application relates to the technical field of battery cells, and in particular to a battery cell.

### BACKGROUND

In the related art, the power battery cell usually adopts an aluminum housing structure with an explosion-proof structure arranged thereon. The explosion-proof structure works when the battery cell thermally runs away, so as to exhaust and relieve pressure, and thus prevent the battery cell from exploding due to excessive internal pressure.

### SUMMARY

As the capacity of battery cells increases, the explosion-proof structure in related technologies is gradually unable to meet the explosion-proof requirements. The explosion-proof structure may not be able to work in time after thermal runaway occurs, resulting in the risk of explosion of the battery cells.

The present application provides a battery cell, including an electrode assembly and a housing, wherein the electrode assembly is arranged in the housing, and an explosion-proof structure is arranged on the housing;

wherein the valve opening area S of the explosion-proof structure, the valve opening pressure P of the explosion-proof structure, the electrolyte injection volume m of the battery cell, and the capacity C of the battery cell satisfy the following formula:
$2.4 \leq S \times P - C / \left(m\times 1000\right) \leq 5.4 .$

### BENEFICIAL EFFECTS

In this application, the cover is arranged with an appropriate valve opening area, valve opening pressure, electrolyte injection amount of the battery cell and the capacity of the battery cell of the explosion-proof structure, so that when the battery cell fails and causes thermal runaway, the explosion-proof structure can work in time, and different parameters, for example the capacity of the battery cell, can be set according to actual conditions to meet the explosion-proof requirements of large-capacity batteries. Specifically, the four parameters of the valve opening area of the explosion-proof structure, valve opening pressure of the explosion-proof structure, electrolyte injection amount of the battery cell and the capacity of the battery cell are associated according to 2.4 ≤ S×P-C/(m×1000) ≤ 5.4, so that those skilled in the art is able to adjust the parameters according to the actual conditions of the battery cell according to this formula to adapt to the explosion-proof requirements of batteries of different capacities. The values of the left and right boundaries of the formula constitute the safety range in which the explosion-proof structure works normally. More specifically, when the parameters of the explosion-proof structure meet S×P-C/(m×1000) ≥ 2.4, it can ensure that the valve opening area and valve opening pressure of the explosion-proof structure can effectively cope with the sharp rise in the internal pressure of the battery cell. When the parameters of the explosion-proof structure meet S×P-C/(m×1000) ≤ 5.4, it can avoid the situation that it is difficult for the explosion-proof structure to work. This can avoid the situation where the explosion-proof structure cannot work in time during thermal runaway, and ensure that the battery cell will not explode due to excessive pressure when overheated.

### BRIEF DESCRIPTION OF THE DRAWINGS

FIG. 1 is a schematic structural diagram of a battery cell according to an embodiment of the present application.
FIG. 2 is a schematic structural diagram of a cover according to an embodiment of the present application.

### List of reference numerals:

1, battery cell; 11, housing; 12, cover; 121, plate; 122, explosion-proof structure; 1221, notch; 123, pole.

### DETAILED DESCRIPTION OF THE EMBODIMENTS

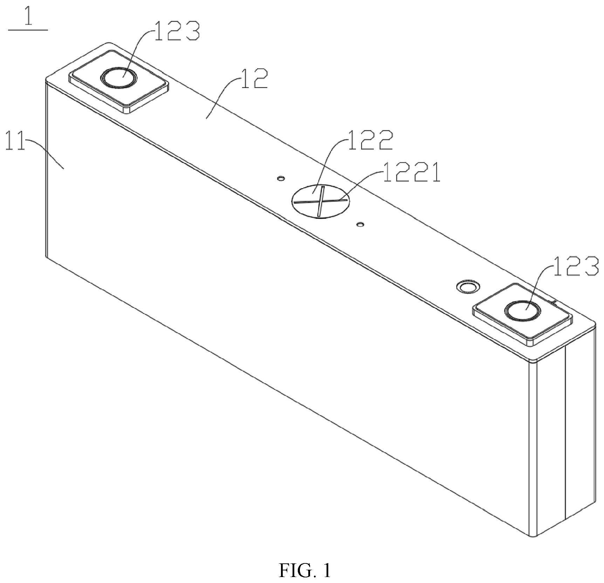

Referring to FIG. 1, an embodiment of the present application provides a battery cell 1, including a housing 11, an electrode assembly (not shown in the figures), and a cover 12. An opening is formed on a side of the housing 11 to facilitate the assembly of components in the battery cell 1, such as facilitating the placement of the electrode assembly into the housing 11. The electrode assembly is arranged in the housing 11 and connected to the cover 12, especially electrically connected to the pole 123 of the cover 12, for conducting the electrical energy of the electrode assembly. The cover 12 is provided at the opening of the housing 11 to seal the opening of the housing 11 so that the cover 12 is in sealing connection with the housing 11.

It should be noted that the active material inside the battery cell 1 may be any one of an iron-lithium system, a medium-nickel ternary system, a high-nickel ternary system, a sodium-electric system, and a manganese iron-phosphate lithium system.

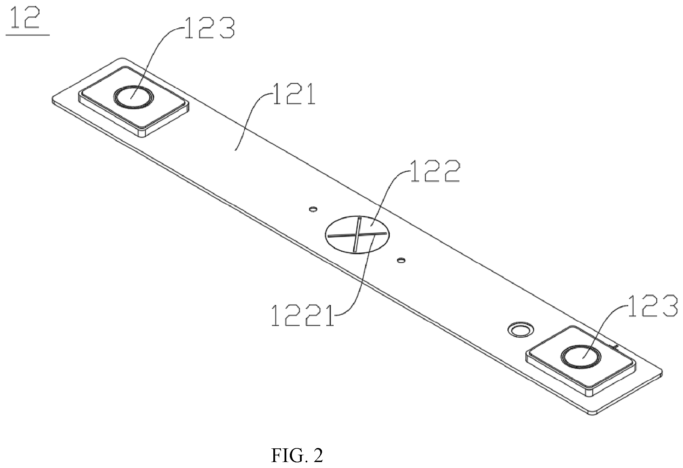

Please refer to FIG. 2, the cover 12 includes a plate 121, a pole 123 and an explosion-proof structure 122. The pole 123 includes a positive pole and a negative pole, which are arranged opposite to each other along the length direction of the plate 121, and the explosion-proof structure 122 is arranged between the positive pole and the negative pole. The plate 121 is arranged on the housing 11 and seals and covers the opening of the housing 11. An explosion-proof hole is also opened on the plate 121. Correspondingly, the explosion-proof structure 122 is located at the explosion-proof hole and covers the explosion-proof hole. The positive pole and the negative pole are respectively connected to the positive electrode and the negative electrode in the electrode assembly.

The valve opening area S of the explosion-proof structure 122, the valve opening pressure P of the explosion-proof structure 122, the electrolyte injection amount m of the battery cell 1, and the capacity C of the battery cell 1 satisfy the following formula:
$2.4 \leq S \times P - C / \left(m\times 1000\right) \leq 5.4 ;$

S is the valve opening area of the explosion-proof structure 122, P is the valve opening pressure of the explosion-proof structure 122, m is the electrolyte injection amount of the battery cell 1, and C is the capacity of the battery cell 1. It should be noted that the valve opening area of the explosion-proof structure 122 refers to the effective channel area of the pressure relief channel of the explosion-proof structure 122 through which the internal gas passes when the explosion-proof structure 122 is in the open state. The valve opening pressure of the explosion-proof structure 122 refers to the pressure inside the battery cell when the explosion-proof structure 122 starts to work and forms a pressure relief channel. The electrolyte injection amount of the battery cell 1 refers to the total mass of the electrolyte filled inside the battery cell. The capacity of the battery cell 1 refers to the total amount of electricity that the battery cell can provide under specific charging and discharging conditions.

According to the technical solutions of the present application, the valve opening area, valve opening pressure, electrolyte injection amount of the battery cell 1 and the capacity of the battery cell 1 of the explosion-proof structure 122 are appropriately set, so that when the battery cell 1 fails and causes thermal runaway, the explosion-proof structure 122 can work in time, and different parameters, for example the capacity of the battery cell 1, can be set according to actual conditions, so as to meet the explosion-proof requirements of large-capacity battery cells 1. Specifically, the four parameters of the valve opening area of the explosion-proof structure 122, valve opening pressure of the explosion-proof structure 122, electrolyte injection amount of the battery cell 1 and the capacity of the battery cell 1 are associated according to 2.4 ≤ S×P-C/(m×1000) ≤ 5.4, so that those skilled in the art is able to adjust the parameters according to the actual conditions of the battery cell 1 according to this formula to adapt to the explosion-proof requirements of battery cells of different capacities. The values of the left and right boundaries of the formula constitute the safety range in which the explosion-proof structure 122 works normally. More specifically, when the parameters of the explosion-proof structure 122 meet S×P-C/(m×1000) ≥ 2.4, it can ensure that the valve opening area and valve opening pressure of the explosion-proof structure 122 can effectively cope with the sharp rise in the internal pressure of the battery cell 1. When the parameters of the explosion-proof structure 122 meet S×P-C/(m×1000) ≤ 5.4, it can avoid the situation that it is difficult for the explosion-proof structure 122 to work. This can avoid the situation where the explosion-proof structure 122 cannot work in time during thermal runaway, and ensure that the battery cell 1 will not explode due to excessive pressure when overheated.

Specifically, S in the above formula represents the valve opening area of the explosion-proof structure 122, and the unit of S is cm², which refers to the area through which gas can pass after the explosion-proof structure 122 works. The larger the valve opening area, the faster the pressure is released. P represents the valve opening pressure of the explosion-proof structure 122 (in MPa), that is, the pressure value at which the explosion-proof structure 122 starts to work. The higher the valve opening pressure, the stronger the explosion-proof structure 122 is able to tolerate the pressure inside the battery cell 1. The m represents the electrolyte injection volume of the battery cell 1 (unit: kg), that is, the total weight of the electrolyte filled in the battery cell 1. The injection volume affects the pressure accumulation speed in the battery cell 1. The more the injection volume, the faster the internal pressure accumulates. C represents the capacity of the battery cell 1 (unit: Ah), that is, the rated capacity of the battery cell 1, which affects the charge and discharge performance of the battery cell 1. The larger the capacity, the more energy the battery cell 1 can provide, but it is also easier to generate heat during the charge and discharge process.

In an embodiment, it is assumed that the parameters of the battery cell 1 are as follows:
The capacity of the battery cell 1 is C=300Ah; the electrolyte injection amount is m=1kg; the valve opening area of the explosion-proof structure 122 is S=3cm²; and the valve opening pressure is P=1MPa.

Substituting the above specific values into the formula, we can get:
S×P-C/(m×1000) = 0.33, it can be seen that the calculated value does not satisfy the range of 2.4 ≤ S×P-C/(m×1000) ≤ 5.4. Those skilled in the art can selectively adjust the four parameters of the valve opening area of the explosion-proof structure 122, the valve opening pressure of the explosion-proof structure 122, the electrolyte injection amount of the battery cell 1, and the capacity of the battery cell 1 according to the calculated values. In the above-mentioned example embodiment, since the calculation result is lower than the lower limit of the formula, i.e., 2.4, this indicates that the current settings of valve opening area and valve opening pressure may not be sufficient to resist the pressure accumulated inside the battery cell 1 in actual use. Therefore, the staff may need to increase the valve opening area or increase the valve opening pressure so that the formula calculation result rises to above 2.4, thereby ensuring the safety of the explosion-proof structure 122. The ratio of electrolyte injection amount to capacity in the formula plays a significant role in the pressure response of the explosion-proof structure 122. In this example, since the injection volume is large (1 kg) and the capacity is relatively small (300 Ah), the ratio of the injection volume to the capacity is too large, which directly reduces the final calculation result. Therefore, if the injection volume is relatively large, a larger valve opening area or valve opening pressure is required to offset this effect. By using this formula, the staff can ensure the opening reliability of the explosion-proof structure 122 by setting an appropriate range for the valve opening area and the pressure under different capacity and injection volume conditions. In the event that the conditions are not met, the formula provides guidance to the staff, indicating which parameters need to be adjusted to meet safety requirements.

In some embodiments, the value range of the valve opening area S of the explosion-proof structure 122 is 0.5-10 cm²; the value range of the valve opening pressure P of the explosion-proof structure 122 is 0.5-1 MPa; the value range of the electrolyte injection volume m of the battery cell 1 is 0.25-3.2 kg; the value range of the capacity C of the battery cell 1 is 100-800 Ah. The value ranges of the above parameters are obtained through experiments. The staff can set the battery cell 1 according to the value ranges of the above parameters. For example:

It is assumed that the design parameters of a certain battery cell 1 are as follows: the capacity of the battery cell 1 is C=400 Ah; the electrolyte injection amount is m=1.5 kg; the valve opening area of the explosion-proof structure 122 is S=6 cm²; and the valve opening pressure is P=0.8 MPa.

Substituting these parameters into the formula:
$2.4 \leq S \times P - C / \left(m\times 1000\right) \leq 5.4 ,$ we can get:
$S \times P - C / \left(m\times 1000\right) = 1.05 .$

The calculation result does not satisfy the formula 2.4 ≤ S×P-C/(m×1000) ≤ 5.4, so the staff knows that the battery cell 1 needs to be further adjusted in parameters such as valve opening area, valve opening pressure, injection volume or capacity.

To satisfy the formula, the staff increases the valve opening pressure to 1 MPa, and then the calculated value is 2.25. At this time, the calculation result is within the range of the formula and meets the safety requirements. The staff can select this parameter combination for the specific application of the explosion-proof structure 122.

Furthermore, the value range of the valve opening area S of the explosion-proof structure 122 can be further limited to 2.5-5.0 cm². The valve opening area value in this range is suitable for application to specific medium and large capacity battery cells 1 (such as 300-600 Ah battery cells 1) to more accurately balance the requirements between pressure release and structural strength of the explosion-proof structure 122. By narrowing the value range of the valve opening area, further control of the pressure release effect can be achieved, so that the explosion-proof structure 122 can operate more stably under specific capacity and pressure.

In some embodiments, a portion of the explosion-proof structure 122 that is aligned with the explosion-proof hole is provided with a notch 1221, and the depth of the notch 1221 and the valve opening area of the explosion-proof structure 122 satisfy the following relationship:
$0.05 \leq d / S \leq 0.2 ;$
the length of the notch 1221 and the valve opening pressure of the explosion-proof structure 122 satisfy the following relationship:
   $L = β \times 1 / P + γ ;$
the width of the notch 1221 is inversely proportional to the valve opening pressure of the explosion-proof structure 122;
wherein, d is the depth of the notch 1221, S is the valve opening area of the explosion-proof structure 122, L is the length of the notch 1221, P is the valve opening pressure of the explosion-proof structure 122, and β and γ are both constants.

Specifically, by controlling the depth, length and width of the notch 1221, the explosion-proof structure 122 is preferentially torn along the notch 1221 when the set valve opening pressure is reached, ensuring that the pressure is released in a safe range in a timely manner. The depth of the notch 1221 is proportional to the valve opening area, that is, 0.05 ≤ d/S ≤ 0.2, which means that the depth of the notch 1221 can ensure that there is a preferential tearing point on the surface of the explosion-proof structure 122 under the condition of satisfying the valve opening area. In view of the inverse relationship between the length of the notch 1221 and the valve opening pressure L = β×1/P+γ, the length of the notch 1221 increases at a lower pressure, thereby increasing the tearing path and preventing unstable tearing when high pressure accumulates. According to the inverse relationship between the width of the notch 1221 and the valve opening pressure, the width of the notch 1221 is larger at a lower pressure, which is conducive to directional tearing at low pressure and further improves the pressure release effect. When the valve opening pressure is low, the width of the notch 1221 is large, making the notch 1221 area easy to tear, thereby ensuring that the explosion-proof structure 122 will not work for no reason when the pressure is lower than the set pressure. When the valve opening pressure is high, the width of the notch 1221 is set narrower to ensure the structural strength of the valve. Under the limitation of the depth, length and width of the notch 1221, the tearing path of the explosion-proof structure 122 will not be out of control under specific pressure conditions, and the total area of the notch 1221 still meets the formula conditions, ensuring the structural stability of the explosion-proof structure 122.

Furthermore, the total area of the notches 1221 and the valve opening area satisfy the following relationship:
${S}_{k} = ζ S ;$
wherein, Sₖ is the total area of the notch 1221, ζ is a constant, and the value range of ζ is 0.1-0.3.

By using the formula Sₖ = ζ S, it can be ensured that the area of the notch 1221 will not be too large to weaken the structural strength of the explosion-proof structure 122, nor will it be too small to affect the tearing effect. It should be noted that Sₖ is the total area of the notch 1221, specifically the sum of the surface areas of all notches 1221 on the explosion-proof structure 122. The total area of the notches 1221 is used to control the tearing area of the explosion-proof structure 122 to avoid structural failure caused by large-area tearing. The proportional coefficient ζ is used to represent the ratio between the total area of the notch 1221 and the valve opening area to control the size of the area of the notch 1221. When the proportional coefficient value is large, the total area of the notch 1221 is relatively large; when the proportional coefficient is small, the area of the notch 1221 is relatively small.

In some embodiments, the valve opening area of the explosion-proof structure 122 satisfies the following relationship:
S = αm+δ1, this formula defines that the valve opening area S is in linear proportion to the injection volume m, so as to ensure that the valve opening area of the explosion-proof structure 122 can be adaptively adjusted according to the injection volume m. The α and δ1 are constants, and the value range of α is 1.2-1.8, and the value range of δ1 is 0.8-1.8.

The staff can determine the value of the valve opening area of the explosion-proof structure 122 according to the formula S = αm+δ1, and then substitute the determined value of valve opening area into the formula 2.4 ≤ S×P-C/(m×1000) ≤ 5.4 to check whether the current value of the valve opening area meets the requirements.

Furthermore, the value range of the adjustment coefficient α may be 1.4-1.6, and the value range of the constant offset δ1 may be 1.2-1.5.

In some embodiments, the electrolyte injection amount of the battery cell 1 and the capacity of the battery cell 1 satisfy the following relationship:
$m = kC / 1000 ;$
where, k is a constant, and the value range of k is 2.5-4. The value of k can be obtained through a large amount of experimental data.

In order to verify the correctness of 2.4 ≤ S×P-C/(m×1000) ≤ 5.4, a comparison of multiple groups of examples and comparative examples is performed below:

In the following embodiments and comparative examples, the battery cell 1 is a lithium iron phosphate battery cell 1. The parameters of each embodiment and comparative example are as follows:

**Table 1**

| | Valve opening area (cm²) | Valve opening pressure (MPa) | Liquid injection volume (kg) | Capacity (Ah) | S×P-C/(m×1000) |
|---|---|---|---|---|---|
| Example 1 | 3.65 | 0.9 | 0.48 | 160 | 2.95 |
| Example 2 | 7.09 | 0.65 | 2.01 | 630 | 4.30 |
| Example 3 | 3.65 | 0.75 | 0.71 | 230 | 2.41 |
| Example 4 | 7.09 | 0.8 | 2.01 | 630 | 5.36 |
| Comparative Example 1 | 3.65 | 0.65 | 0.48 | 160 | 2.04 |
| Comparative Example 2 | 7.09 | 1 | 2.01 | 630 | 6.78 |
| Comparative Example 3 | 7.09 | 0.8 | 2.52 | 630 | 5.42 |
| Comparative Example 4 | 1.58 | 0.8 | 0.52 | 160 | 0.96 |

It can be seen from the above table that the values calculated by the formula S×P-C/(m×1000) for Examples 1 to 4 are all within the range of 2.4 to 5.4, and the values calculated by the formula S×P-C/(m×1000) for Comparative Examples 1 to 4 are not within the range of 2.4 to 5.4.

The battery cells 1 of Examples 1-4 and Comparative Examples 1-4 were subjected to overcharge tests respectively, and the specific test process was as follows:
Under the environment of 25 °C, the battery cell 1 is charged with constant current and constant voltage at 0.5C current, with the cut-off voltage at 3.65V and the cut-off current at 0.05C. The battery cell 1 is discharged with constant current at 0.5C current to 2.5V, and the cycle is repeated 3 times. The discharge capacity of the last time is taken as the initial capacity and recorded as Q. The battery cell 1 is then charged with constant current and constant voltage at 0.5Q current, with a cut-off voltage of 3.65V and a cut-off current of 0.05Q. After being fully charged, it is continuously charged at 1Q until thermal runaway, and the valve opening SOC and thermal runaway SOC are recorded. The judgment standard of thermal runaway refers to the national standard GB38031-2020 for the safety of power battery cells 1 for electric vehicles. It should be noted that C refers to the nominal capacity of the battery cell 1, in Ah. The above 0.5C current indicates the current at a charge and discharge rate of half the nominal capacity. For a 100Ah battery cell 1, the 0.5C current is 50A, that is, the current rate at which the battery cell 1 is fully charged or discharged within 2 hours. Q is the discharge capacity after multiple charge and discharge cycles, in Ah, called amperehours, which is the remaining capacity when discharged to a specific voltage (such as 2.5V) under specified conditions. SOC (State of Charge) indicates the current remaining power percentage of battery cell 1 and is used to describe the charging state of battery cell 1. The SOC value is usually in a range of 0% to 100%, with 0% indicating complete discharge and 100% indicating complete charge. For example, in a charging test, the valve opening SOC indicates the state of charge when the explosion-proof structure 122 works, and the thermal runaway SOC indicates the state of charge when the battery cell 1 reaches thermal runaway.

The following is a table of experimental results obtained from Examples 1-4 and Comparative Examples 1-4, respectively:

**Table 2**

| | Valve opening SOC (%) | Thermal runaway SOC (%) | Explosion or not |
|---|---|---|---|
| Example 1 | 115 | 127 | no |
| Example 2 | 116 | 126 | no |
| Example 3 | 116 | 126 | no |
| Example 4 | 116 | 127 | no |
| Comparative Example 1 | 110 | 126 | no |
| Comparative Example 2 | 121 | 125 | yes |
| Comparative Example 3 | 114 | 118 | no |
| Comparative Example 4 | 113 | 121 | yes |

It can be seen from the above-mentioned Examples 1-4 and Comparative Examples 1-4 that: in all Examples 1-4, the valve is opened before reaching thermal runaway, and no explosion occurred; in Comparative Example 1, the valve is opened when overcharged to 110% SOC, and the valve opening SOC was too low to meet market demand; the valve opening pressure of Comparative Example 2 was too large, and the valve is opened at 121% SOC, and thermal runaway and explosion occurred at 125% SOC; the injection volume of Comparative Example 3 was too high, and the valve opening pressure was too low, and the valve would open when overcharged to 114% SOC, which could not meet market demand; the valve opening area of Comparative Example 4 was set too small, and thermal runaway occurred at 121% SOC, followed by an explosion.

In summary, the staff set the valve opening area of the explosion-proof structure 122, valve opening pressure of the explosion-proof structure 122, electrolyte injection volume of the battery cell 1 and capacity of the battery cell 1 by referring to the formula 2.4 ≤ S×P-C/(m×1000) ≤ 5.4, which can adapt to battery cells 1 of various capacities, such as small-capacity battery cells 1 and large-capacity battery cells 1, so that the explosion-proof structure 122 can achieve timely valve opening and avoid premature valve opening.

## Claims

1. A battery cell, comprising an electrode assembly and a housing, wherein the electrode assembly is arranged in the housing, and an explosion-proof structure is provided on the housing;
wherein a valve opening area S of the explosion-proof structure, a valve opening pressure P of the explosion-proof structure, an electrolyte injection amount m of the battery cell and a capacity C of the battery cell satisfy: $2.4 \leq S \times P - C / \left(m\times 1000\right) \leq 5.4 .$

2. The battery cell according to claim 1, wherein notches are formed on the explosion-proof structure.

3. The battery cell according to claim 2, wherein a depth of the notches and the valve opening area of the explosion-proof structure satisfy: $0.05 \leq d / S \leq 0.2 ;$ where, d is the depth of the notches, and S is the valve opening area of the explosion-proof structure.

4. The battery cell according to claim 3, wherein a length of the notches and the valve opening pressure of the explosion-proof structure satisfy: $L = β \times 1 / P + γ ;$ where, L is the length of the notches, P is the valve opening pressure of the explosion-proof structure, and β and γ are both constants.

5. The battery cell according to any one of claims 2 to 4, wherein a total area of the notches and the valve opening area satisfy: ${S}_{k} = ζ S ;$ where, Sₖ is the total area of the notches, and ζ is a constant.

6. The battery cell according to claim 5, wherein a value range of ζ is 0.1-0.3.

7. The battery cell according to any one of claims 1 to 6, wherein the valve opening area of the explosion-proof structure satisfies: $S = αm + δ 1 ;$ where, α and δ1 are constants.

8. The battery cell according to claim 7, wherein a value range of α is 1.2-1.8, and a value range of δ1 is 0.8-1.8.

9. The battery cell according to claim 8, wherein the value range of α is 1.4-1.6, and the value range of δ1 is 1.2-1.5.

10. The battery cell according to any one of claims 1 to 5, wherein the electrolyte injection amount of the battery cell and the capacity of the battery cell satisfy: $m = kC / 1000 ;$ where, k is a constant.

11. The battery cell according to claim 10, wherein a value range of k is 2.5-4.

12. The battery cell according to any one of claims 1 to 5, wherein the valve opening area S of the explosion-proof structure is in a range from 0.5 to 10 cm².

13. The battery cell according to claim 12, wherein the valve opening area S of the explosion-proof structure is in a range from 2.5 to 5.0 cm².

14. The battery cell according to any one of claims 1 to 5, wherein the valve opening pressure P of the explosion-proof structure is in a range from 0.5 to 1 MPa.

15. The battery cell according to any one of claims 1 to 5, wherein the electrolyte injection volume m of the battery cell is in a range from 0.25 to 3.2 kg.

16. The battery cell according to any one of claims 1 to 5, wherein the capacity C of the battery cell is in a range from 100 to 800 Ah.

17. The battery cell according to any one of claims 1 to 5, further comprising a cover, wherein the cover is provided with the explosion-proof structure and has an explosion-proof hole, the explosion-proof hole is in communication with an interior of the housing; the explosion-proof structure is provided on the cover and covers the explosion-proof hole.

18. The battery cell according to any one of claims 1 to 5, wherein an active material of the battery cell is any one of an iron-lithium system, a medium-nickel ternary system, a high-nickel ternary system, a sodium-electric system, and a manganese iron phosphate lithium system.
